# EUROPÄISCHE PATENTSCHRIFT

(11) **EP 0 780 595 B1**
(45) Veröffentlichungstag und Bekanntmachung des Hinweises auf die Patenterteilung: **15.03.2000**
(21) Anmeldenummer: 96119702.7
(22) Anmeldetag: 09.12.1996
(51) Int. Cl.: F16G 13/16

(54) **Endlasche für Energieführungsketten**
End plate for energy carriers supporting chain
Plaque d'extrémité pour chaines porteuses de lignes de transport d'énergie

(30) Priorität: 18.12.1995 DE 19547221
(43) Veröffentlichungstag der Anmeldung: 25.06.1997
(73) Patentinhaber: MURRPLASTIK GmbH, SYSTEM-TECHNIK, D-71570 Oppenweiler (DE)
(72) Erfinder: Ehmann, Bruno, 73563 Mögglingen (DE); Funk, Rainer, 71543 Wüstenrot (DE)
(74) Vertreter: Jeck, Anton, Dipl.-Ing.

(56) Entgegenhaltungen:
- DE-A- 3 139 735
- DE-U- 9 102 122
- DE-U- 9 412 252

## Beschreibung

Die Erfindung betrifft eine Endlasche für Energieführungsketten nach dem Oberbegriff des Patentanspruches 1.

Laschen der eingangs genannten Art sind bekannt und z.B. in der DE- 31 39 735 A1 beschrieben. Im bekannten Falle ist der Ansatz zweiteilig und weist aufeinander zu gerichtete und um den Gelenkpunkt gleichmäßig verteilte Zapfen auf, die in eine bogenförmige Durchbrechung des einen Schenkels der Winkellasche eingreifen. Die Winkellasche ist somit um die Achse teilweise verschwenkbar. Ein erheblicher Nachteil der bekannten Endlasche besteht darin, daß sie aus mehreren Teilen besteht, wodurch zwischen der Winkellasche und der Endlasche unerwünschtes Spiel eingebracht wird, was zur Beschädigung der Endlasche führen kann. Schließlich ist in der DE 91 02 122 U1 eine Endlasche mit Ansatz offenbart, der mehrere vorstehende Zapfen aufweist, die mit Öffnungen des Anschlußstückes verbindbar sind. Als Nachteil dieser Endlasche ist die Tatsache anzusehen, daß die Übertragung der Kräfte vom Anschlußstück auf den Ansatz ungünstig erfolgt.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn es sich um einen Ansatz mit Öffnungen handelt, in die das Anschlußstück zumindest teilweise hindurchführbar ist, so daß die Kräfteübertragung vom Anschlußstück auf den Ansatz optimal erfolgt, und zwar ohne Erhöhung des technischen Aufwandes, der mit der Herstellung der Endlasche und/oder des Anschlußstückes verbunden wäre. Auf den Ansatz wirken ausschließlich Zugkräfte.

Weitere zweckmäßige und vorteilhafte Ausgestaltungen der Erfindung gehen aus den Unteransprüchen hervor.

Handelt es sich um eine Endlasche mit einem im Profil L-förmigen Anschlußstück, dessen einer Schenkel mit dem Absatz verbindbar ist, dann ist es zweckmäßig, wenn der Schenkel mindestens einmal gekröpft ist und mindestens zwei Partien besitzt, von denen die eine Partie auf der einen Seite und die andere Partie auf der anderen Seite des Ansatzes positionierbar ist, während das die beiden Partien verbindende Zwischenstück in der Öffnung zumindest teilweise angeordnet ist. Auf die beiden Partien, die auf der Außen- bzw. Innenseite der Endlasche angeordnet sind, wirken praktisch keine Kräfte. Die Übertragung der Kräfte von dem Anschlußstück auf die Endlasche erfolgt grundsätzlich über das Zwischenstück.

Ferner ist vorgesehen, daß die eine und/oder andere Partie mit dem Ansatz lösbar verbindbar ist. Durch diese Maßnahmen wird eine feste Verbindung zwischen der Endlasche und dem Anschlußstück hergestellt.

Eine besonders zweckmäßige Ausgestaltung sieht vor, daß der mit dem Ansatz verbindbare Schenkel ein Flachkörper ist, dessen eine Partie sowie das Zwischenstück durch die Öffnung hindurchführbar sind. Im Rahmen dieses Erfindungsgedankens ist es zweckmäßig, wenn der Querschnitt des Schenkels einen in etwa rechtwinkligen Außenumriß aufweist und die Öffnung die Form eines entsprechenden Schlitzes besitzt.

Um zu erreichen, daß das Anschlußstück mindestens vier, vorzugsweise acht, unterschiedliche und regelmäßig rechtwinklig zueinander angeordnete Positionen einnimmt, ist es zweckmäßig, wenn die Schlitze ein Kreuz bilden.

Einige Ausführungsbeispiele der Erfindung sind in der Zeichnung schematisch dargestellt und werden im folgenden näher erläutert. Es zeigen
- Fig. 1: eine Endlasche mit Ansatz in Seitenansicht,
- Fig. 2: die Endlasche nach Fig. 1 in Richtung des Pfeiles II,
- Fig. 3: die Innenseite der Endlasche nach Fig. 1,
- Fig. 4: einen Schnitt entlang der Linie VI-VI nach Fig. 3,
- Fig. 5: den mit V bezeichneten Teil nach Fig. 4 vergrößert dargestellt,
- Fig. 6: den mit VI bezeichneten Teil nach Fig. 3 vergrößert dargestellt,
- Fig. 7: ein Anschlußstück in Draufsicht,
- Fig. 8: einen Schnitt entlang der Linie VIII-VIII nach Fig. 7,
- Fig. 9: eine weitere Endlasche in Seitenansicht,
- Fig. 10: den mit X bezeichneten Teil nach Fig. 9 vergrößert dargestellt,
- Fig. 11: eine weitere Endlasche in Seitenansicht,
- Fig. 12: die Innenseite der in Fig. 11 dargestellten Endlasche,
- Fig. 13: eine weitere Endlasche mit einem Anschlußstück,
- Fig. 14: die in Fig. 13 dargestellte Endlasche in Richtung des Pfeiles XVI,
- Fig. 15: die Innenseite der in Fig. 13 dargestellten Endlasche,
- Fig. 16: einen Schnitt entlang der Linie XVI-XVI nach Fig. 15 und
- Fig. 17 bis 20: unterschiedliche Positionen des Anschlußstückes in bezug auf die Endlasche.

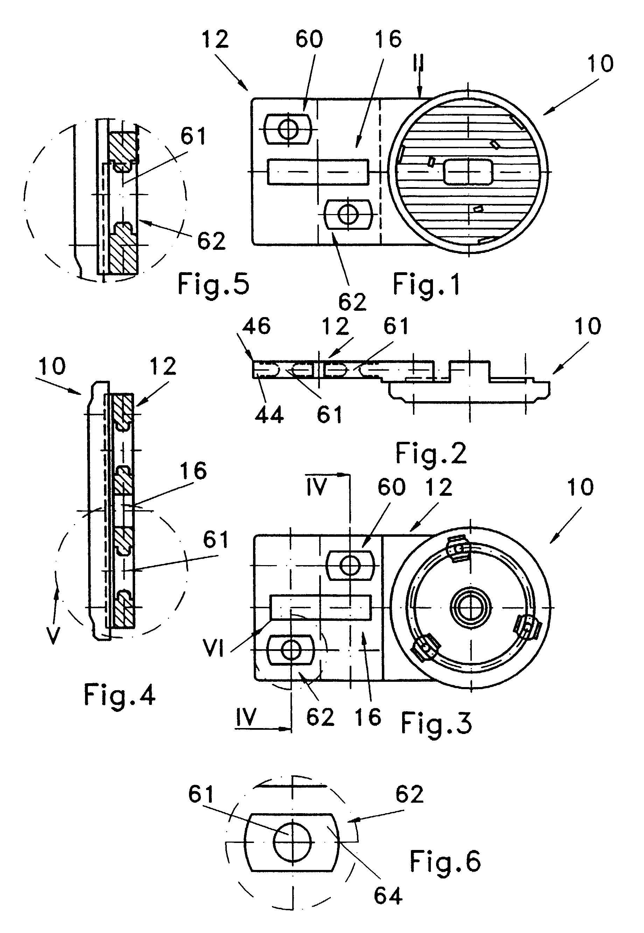

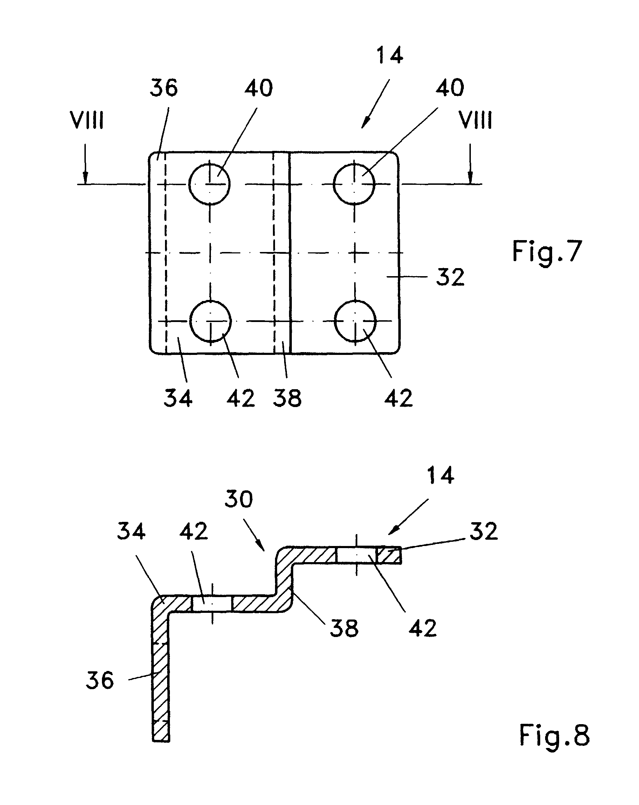

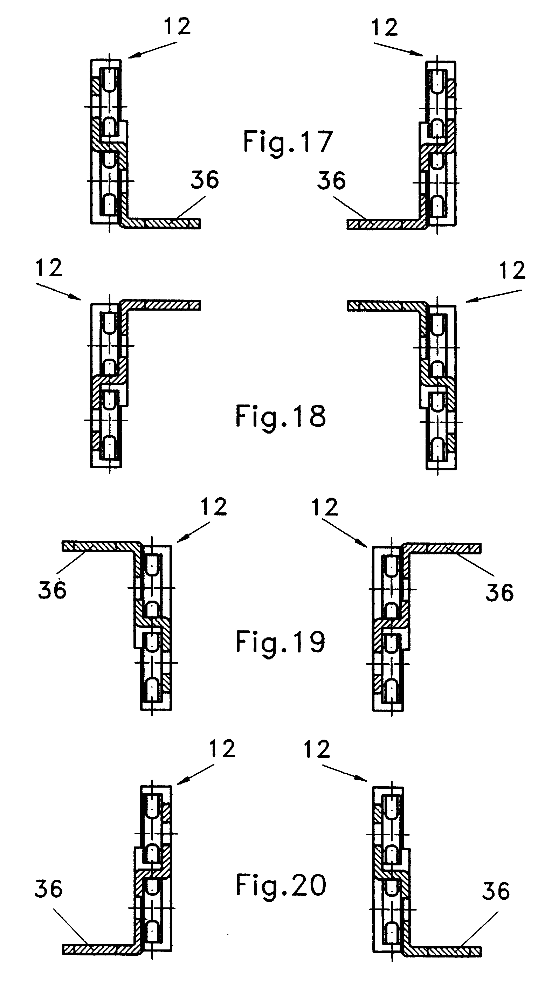

In den Figuren 1 bis 6 sind eine Endlasche 10 bzw. Teile dieser Endlasche für Energieführungsketten mit einem Ansatz 12 dargestellt, die mit dem Anschlußstück nach Figuren 7 und 8 unterschiedliche Arbeitspositionen einnehmen kann, wie insbesondere in den Figuren 17 bis 20 dargestellt ist. Der Ansatz 12 weist eine Öffnung 16 auf, durch die ein Teil 30 des in den Figuren 7 und 8 dargestellten Anschlußstücks 14 hindurchführbar und mit dem Ansatz 12 betrieblich verbindbar ist. Das Anschlußstück 14 weist ein im wesentlichen L-förmiges Profil auf, dessen einer Schenkel 30 mit dem Ansatz 12 verbindbar ist. Der Schenkel 30 ist einmal gekröpft und weist zwei Partien 32,34 auf, von denen die eine Partie 32 auf der einen Seite 46 und die andere Partie 34 auf der anderen Seite 44 des Ansatzes 12 positionierbar ist, während das die beiden Partien 32 und 34 verbindende Zwischenstück 38 zumindest teilweise in der Öffnung 16 angeordnet ist. Die eine und/oder andere Partie 32,34 kann mit dem Ansatz 12 mittels Schrauben verbunden werden Hierfür besitzen die Partien 32 und 34 Öffnungen 40 und 42 für nicht näher dargestellte Schrauben, die entsprechende Öffnungen 60,62 der Endlasche durchqueren. Der mit dem Ansatz 12 verbindbare Schenkel 30 ist ein Flachkörper, dessen eine Partie 32 sowie das Zischenstück 38 durch die Öffnung 16 hindurchführbar sind. Man erkennt, daß der Querschnitt des Schenkels 30 einen im wesentlichen rechtwinkligen Außenumriß aufweist und die Öffnung 16 die Form eines entsprechenden Schlitzes besitzt. Bei dem Schenkel 30 handelt es sich um einen achsensymmetrischen Körper mit vier Öffnungen. Allgemein könnten es jedoch auch zwei oder mehr als vier Öffnungen sein. Dabei sind Öffnungen 40,42 so gewählt, daß sie mit den Öffnungen 60,62 des Ansatzes 12 fluchten. Durch diese Öffnungen 60,62 können sodann Schrauben mit Köpfen eingebracht werden, wobei die Köpfe in der Partie 64 formschlüssig und versenkt untergebracht sind. Die eigentliche Schraube ist auf die Durchführung 61 (Fig. 6) abgestimmt, während die Dicke des Kopfes so bemessen ist, daß der Kopf mit der Außen- oder Innenseite des Ansatzes bündig abschließt, so daß der Kopf die gleiche Form besitzt, wie die Partie gemäß Fig. 6. Die Öffnungen 60,62 sind in bezug auf die mittige Ebene des Ansatzes 12 spiegelbildlich ausgebildet, so daß dieselben Schrauben sowohl von der Innenseite als auch von der Außenseite des Ansatzes 12 bündig anbringbar sind. In den Figuren 1 bis 3 ist die Öffnung 16 im mittleren Bereich angeordnet, so daß das in den Figuren 7 und 8 dargestellte Anschlußstück in bezug auf den Ansatz 12 vier verschiedene Positionen einnehmen kann, die schematisch in den Figuren 17 bis 20 dargestellt sind. Das Zwischenstück 38 ist immer in der Öffnung 16 angeordnet und besitzt eine Länge, die in etwa der Dicke des Zwischenstückes 12 entspricht. Der Schenkel 36 weist ebenfalls nicht näher dargestellte Öffnungen auf, in die Schrauben einbringbar sind, so daß die Endlasche 10 mit einem festen bzw. beweglichen Gegenstand ortsfest verbindbar ist.

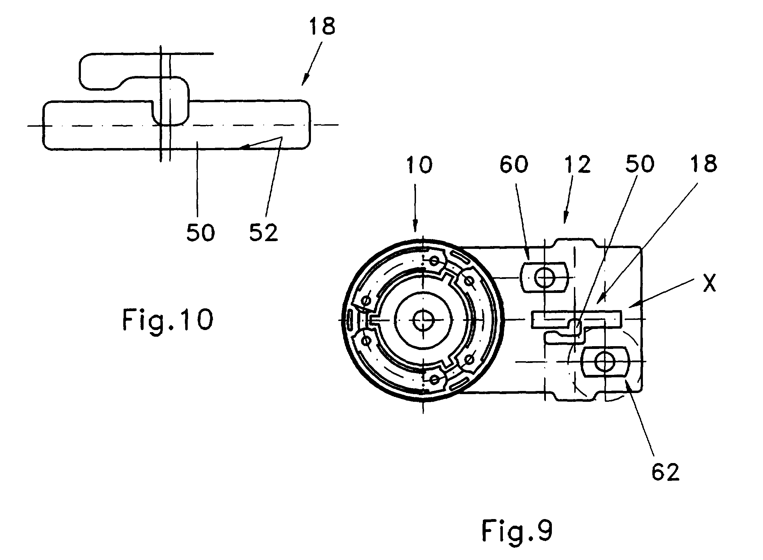

In den Figuren 9 und 10 ist ein Ansatz dargestellt, der sich vom Ansatz nach Fig.1 dadurch unterscheidet, daß in die Öffnung 18 eine elastisch verformbare Nase 50 hineinragt, deren Abstand von der gegenüberliegenden Seite 52 der Öffnung 18 geringer ist als die Dicke des Schenkels 30. Die Nase 50 drückt in das Zwischenstück 38 gegen die Seite 52 der Öffnung 18 und hält es somit fest.

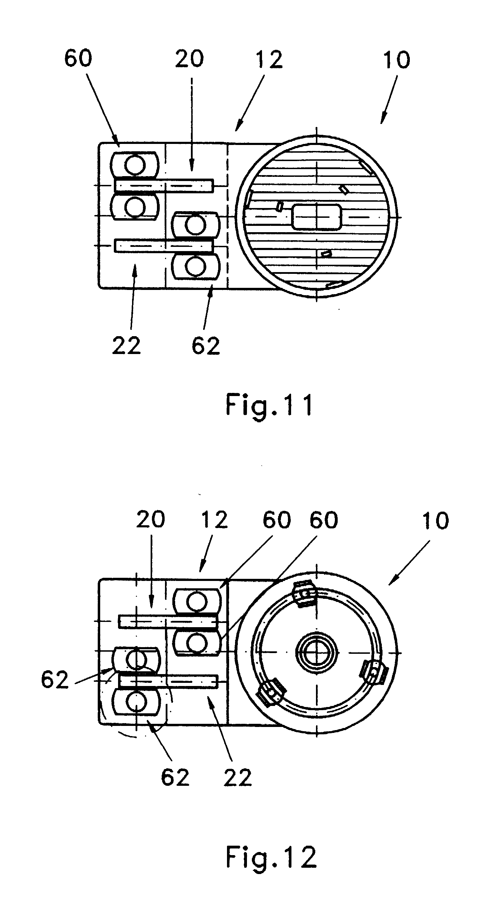

In den Figuren 11 und 12 weist der Ansatz zwei parallel zueinander angeordnete und schlitzartige Öffnungen 20 und 22 auf, wobei von beiden Seiten dieser Öffnungen 20,22 jeweils zwei Öffnungen 16 und 62 für Schrauben ausgebildet sind.

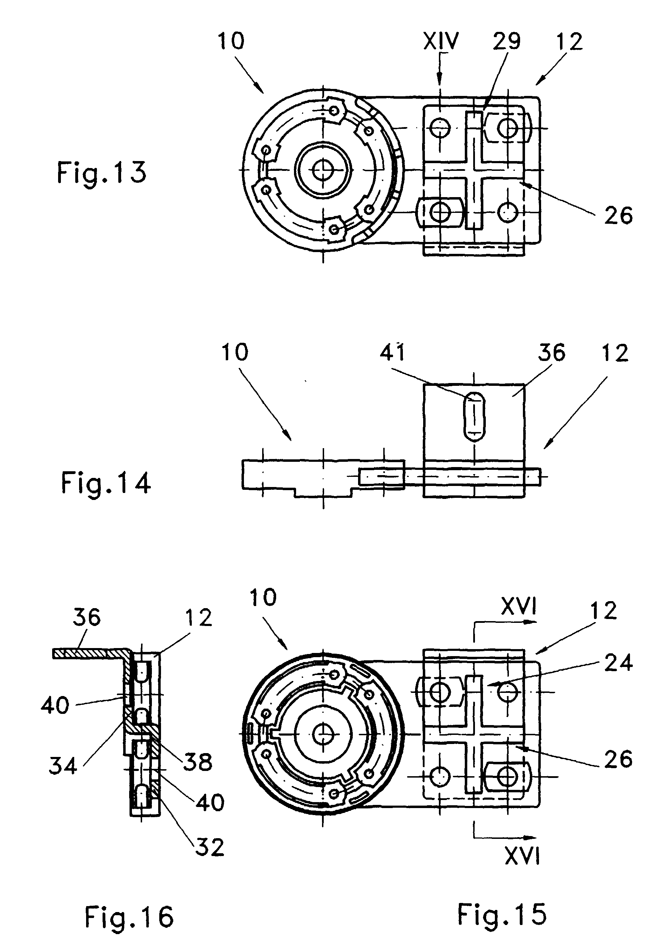

Die Besonderheit des Ansatzes 12 nach den Figuren 13 bis 16 besteht darin, daß die schlitzartigen Öffnungen 24, 26 ein Kreuz definieren, so daß der Schenkel 36 insgesamt acht verschiedene Positionen einnehmen kann.

Die Besonderheit der Erfindung besteht folglich darin, daß mit einem einzigen Anschlußstück und einem einzigen Ansatz 12 praktisch alle vorgesehenen Positionen des Schenkels 36 definiert werden können, ohne dabei weitere Maßnahmen treffen zu müssen.

## Patentansprüche

1. Endlasche (10) für Energieführungsketten mit einem Ansatz (12) sowie einem in bezug auf den Ansatz (12) unterschiedliche Arbeitspositionen einnehmenden Anschlußstück (14),
dadurch gekennzeichnet,
daß der Ansatz (12) mindestens eine Öffnung (16-22) aufweist, durch die ein Teil (30) des Anschlußstücks (14) hindurchführbar und mit dem Ansatz (12) betriebsgemäß verbindbar ist.

2. Endlasche nach Anspruch 1 mit einem in Profil L-förmigen Anschlußstück (14), dessen einer Schenkel (30) mit dem Ansatz (12) verbindbar ist,
dadurch gekennzeichnet,
daß der Schenkel (30) mindestens einmal gekröpft ist und mindestens zwei Partien (32,34) besitzt, von denen die eine Partie (32) auf der einen Seite (46) und die andere Partie (34) auf der anderen Seite (44) des Ansatzes (12) positionierbar ist, während das die beiden Partien (32,34) verbindende Zwischenstück (38) zumindest teilweise in der Öffnung angeordnet ist.

3. Endlasche nach Anspruch 1 oder 2,
dadurch gekennzeichnet,
daß die eine oder/andere Partie (32,34) mit dem Ansatz (12) lösbar verbindbar ist.

4. Endlasche nach einem der Ansprüche 1 bis 3,
dadurch gekennzeichnet,
daß mindestens eine Partie (32,34) mindestens eine Öffnung (40,42) bzw. einen Vorsprung zum lösbaren Verbinden mit dem Ansatz (12) aufweist.

5. Endlasche nach einem der Ansprüche 1 bis 4,
dadurch gekennzeichnet,
daß der mit dem Ansatz (12) verbindbare Schenkel (30) ein Flachkörper ist, dessen eine Partie (32) sowie das Zwischenstück (38) durch die Öffnung (16-26) hindurchführbar sind.

6. Endlasche nach einem der Ansprüche 1 bis 5,
dadurch gekennzeichnet,
daß der Querschnitt des Schenkels einen in etwa rechtwinkligen Außenumriß aufweist und die Öffnungen die Form von Schlitzen besitzen.

7. Endlasche nach einem der Ansprüche 1 bis 6,
dadurch gekennzeichnet,
daß der Schenkel (30) ein achsensymmetrischer Körper mit mindestens zwei Öffnungen (16-26) ist.

8. Endlasche nach einem der Ansprüche 1 bis 7,
dadurch gekennzeichnet,
daß der Ansatz (12) mindestens zwei Schlitze (16-26) aufweist.

9. Endlasche nach einem der Ansprüche 1 bis 8,
dadurch gekennzeichnet,
daß die Schlitze (16-26) parallel zueinander verlaufen oder ein Kreuz definieren.

10. Endlasche nach einem der Ansprüche 1 bis 9,
dadurch gekennzeichnet,
daß in den Schlitz (18) eine elastisch verformbare Nase (50) eingreift, deren Abstand von der gegenüberliegenden Seite (52) des Schlitzes (18) kleiner ist als die Dicke des Schenkels (11).

11. Endlasche nach einem der Ansprüche 1 bis 10,
dadurch gekennzeichnet,
daß oberhalb und/oder unterhalb des Schlitzes (16-26) Öffnungen (60,62) für den Schenkel (30) durchquerende Sperrkörper ausgebildet sind.

12. Endlasche nach einem der Ansprüche 1 bis 11,
dadurch gekennzeichnet,
daß die Öffnungen Vertiefungen (64) aufweisen.

13. Energieführungskette mit Kettengliedern und mindestens einer Endlasche nach einem der Ansprüche 1 bis 12.

## Claims

1. End sprocket (10) for power transmitting chains, including an extension (12) and a connection piece (14), which assumes different operational positions relative to the extension (12), characterised in that the extension (12) has at least one opening (16-22), through which a portion (30) of the connection piece (14) is guidable, and said portion is operatively connectable to the extension (12).

2. End sprocket according to claim 1, including a connection piece (14) which has an L-shaped profile, and one portion (30) of which is connectable to the extension (12), characterised in that the portion (30) is bent at least once and has at least two parts (32, 34), one part (32) of which is positionable on one side (46) of the extension (12), and the other part (34) of which is positionable on the other side (44) of the extension (12), while the intermediate piece (38), which connects the two parts (32, 34), is disposed at least partially in the opening.

3. End sprocket according to claim 1 or 2, characterised in that one or other part (32, 34) is detachably connectable to the extension (12).

4. End sprocket according to one of claims 1 to 3, characterised in that at least one part (32, 34) has at least one opening (40, 42) or respectively a projection member for the detachable connection to the extension (12).

5. End sprocket according to one of claims 1 to 4, characterised in that the portion (30), which is connectable to the extension (12), is a flat body, one part (32) of which and the intermediate piece (38) are guidable through the opening (16-26).

6. End sprocket according to one of claims 1 to 5, characterised in that the cross-section of the portion has a substantially rectangular external configuration, and the openings are in the form of slots.

7. End sprocket according to one of claims 1 to 6, characterised in that the portion (30) is an axis-symmetrical body provided with at least two openings (16-26).

8. End sprocket according to one of claims 1 to 7, characterised in that the extension (12) has at least two slots (16-26).

9. End sprocket according to one of claims 1 to 8, characterised in that the slots (16-26) extend parallel to one another or define a cross.

10. End sprocket according to one of claims 1 to 9, characterised in that a resiliently deformably projection (50) engages in the slot (18), the spacing between said projection and the opposite side (52) of the slot (18) being smaller than the thickness of the portion (11).

11. End sprocket according to one of claims 1 to 10, characterised in that openings (60, 62) for accommodating blocking bodies, which traverse the portion (30), are provided above and/or below the slot (16-26).

12. End sprocket according to one of claims 1 to 11, characterised in that the openings have recesses (64).

13. Power transmitting chain provided with chain links and at least one end sprocket according to one of claims 1 to 12.

## Revendications

1. Plaque d'extrémité pour chaînes porteuses de lignes de transport d'énergie, avec un épaulement (12) ainsi qu'avec une pièce de raccordement (14) adoptant plusieurs positions de travail,
caractérisée
en ce que l'épaulement (12) présente au moins une ouverture (16-22), à travers laquelle peut être passée une partie (30) de la pièce de raccordement (14) et peut être reliée fonctionnellement à l'épaulement (12).

2. Plaque terminale suivant la revendication 1, avec une pièce de raccordement (14) à profil en forme de L dont une aile (30) peut être reliée à l'épaulement (12),
caractérisée
en ce que l'aile (30) est coudée au moins une fois et possède au moins deux parties (32, 34) dont l'une (32) peut être positionnée d'un côté (46) et dont l'autre (34) peut être positionnée de l'autre côté (44) de l'épaulement (12), tandis que la traverse (38) reliant les deux parties (32, 34) est disposée au moins partiellement dans l'ouverture.

3. Plaque terminale suivant la revendication 1 ou 2,
caractérisée
en ce que l'une ou l'autre partie (32, 34) peut être reliée de manière amovible à l'épaulement (12).

4. Plaque terminale suivant l'une quelconque des revendications de 1 à 3,
caractérisée
en ce qu'au moins une partie (32, 34) présente au moins une ouverture (40, 42) ou une protubérance pour la liaison amovible avec l'épaulement (12).

5. Plaque terminale suivant l'une quelconque des revendications de 1 à 4,
caractérisée
en ce que l'aile (30) pouvant être reliée à l'épaulement (12) est un corps plat, dont une partie (32) ainsi que la traverse (38) peuvent être passées au travers l'ouverture (16-26).

6. Plaque terminale suivant l'une quelconque des revendications de 1 à 5,
caractérisée
en ce que la section transversale de l'aile présente un contour sensiblement rectangulaire et en ce que les ouvertures ont la forme de fentes.

7. Plaque terminale suivant l'une quelconque des revendications de 1 à 6,
caractérisée
en ce que l'aile (30) est un corps à symétrie axiale avec au moins deux ouvertures (16-26).

8. Plaque terminale suivant l'une quelconque des revendications de 1 à 7,
caractérisée
en ce que l'épaulement (12) présente au moins deux fentes (16-26).

9. Plaque terminale suivant l'une quelconque des revendications de 1 à 8,
caractérisée
en ce que les fentes (16-26) sont parallèles ou bien définissent une croix.

10. Plaque terminale suivant l'une quelconque des revendications de 1 à 9,
caractérisée
en ce que dans la fente (18) s'engage un nez (50) déformable élastiquement, dont la distance au côté opposé (52) de la fente (18) est inférieure à l'épaisseur de l'aile (11).

11. Plaque terminale suivant l'une quelconque des revendications de 1 à 10,
caractérisée
en ce qu'au-dessus et/ou qu'au-dessous de la fente (16-26) sont formées des ouvertures (60, 62) pour des corps de barrage traversant l'aile (30).

12. Plaque terminale suivant l'une quelconque des revendications de 1 à 11,
caractérisée
en ce que les ouvertures présentent des renfoncements (64).

13. Chaîne porteuse de lignes d'énergie avec des maillons et avec au moins une plaque terminale suivant l'une quelconque des revendications de 1 à 12.
